Europäisches Patentamt

European Patent Office

Office européen des brevets

(11) Publication number: **0 164 337**
**B1**

## EUROPEAN PATENT SPECIFICATION

(45) Date of publication of patent specification: **03.05.89**

(21) Application number: **83903847.8**

(22) Date of filing: **27.10.83**

(86) International application number:
**PCT/US83/01673**

(87) International publication number:
**WO 85/01989 09.05.85 Gazette 85/11**

(51) Int. Cl.⁴: **F 02 K 1/08**

(54) TRANSLATING JET ENGINE NOZZLE PLUG.

(43) Date of publication of application:
**18.12.85 Bulletin 85/51**

(45) Publication of the grant of the patent:
**03.05.89 Bulletin 89/18**

(84) Designated Contracting States:
**DE FR GB NL**

(56) References cited:
**GB-A- 996 461**
**US-A-2 402 363**
**US-A-2 540 594**
**US-A-3 807 639**

(73) Proprietor: **THE BOEING COMPANY**
**Post Office Box 3707 Mail Stop 9H-82**
**Seattle, WA 98124 (US)**

(72) Inventor: **THORNOCK, Russel, Lewis**
**6208 Kirkwood Place North**
**Seattle, WA 98103 (US)**

(74) Representative: **Hoijtink, Reinoud et al**
**OCTROOIBUREAU ARNOLD & SIEDSMA**
**Sweelinckplein 1**
**NL-2517 GK Den Haag (NL)**

## Description

The invention relates to an apparatus for varying the cross-sectional area of a flow path in an exhaust nozzle of a power device as described in the introductory part of claim 1.

Such an apparatus is known from GB-A-996.461. In this known apparatus in the center axial beam a piston-cylinder assembly is arranged. The piston rod is secured to the fixed portion, whereas as the cylinder at its aft end is connected to the slidable plug portion exposed in the gas stream in the exhaust nozzle. This portion encloses telescopically the center axial beam. Special provisions are made to prevent the hot exhaust gas stream from entering the axial opening of the sliding portion.

The known apparatus is relatively complicated for obtaining a reliable support and guiding of the sliding portion and preventing ingression of hot exhaust gases into the system. The invention has for its object to provide an apparatus of the kind said forth above which has an improved simplicity and reliability.

According to the invention this is achieved with the measures of the characterizing part of claim 1. The beam itself can form the piston rod so that a more simple construction is obtained.

Further preferred embodiments of the invention are characterized in the subclaims.

The use of apparatus constructed according to the invention in high-bypass ratio turbofan installations solves the problems in relation to efforts to achieve satisfactory reverse thrust performance in such installations. By use of apparatus constructed according to the invention, it is possible to reduce the thrust of the primary aftward flow without locating thrust reversers with moving parts in the very severe environment of the primary flow. Thus, the previously encountered high failure rate of primary thrust reversers is avoided. The reduction of the thrust of the aftward flow makes it possible for redirected fan flow to provide more efficient braking action. This greater efficiency in braking action is obtained without regard to the degree of proximity of the engine nacelle to either or both of the fuselage and the runway, and helps to compensate for any loss in fan thrust reverser efficiency caused by comprises in reverser design necessitated by proximity of the engine nacelle to the fuselage and the runway. In short, in high-bypass ratio turbofan installations apparatus constructed according to the invention provides efficient, reliable, and safe braking action.

These and other advantages and features will become apparent from the detailed description of the best mode for carrying out the invention that follows.

## Brief Description of the Drawings

In the drawings, like element designations refer to like parts throughout, and:

Fig. 1 is a side elevational view of a high-bypass ratio turbofan installation having fan thrust reversers, with the reversers shown in their forward mode position and with foreground portions of the installation cut away for purposes of illustration.

Fig. 2 is like Fig. 1 except that it shows the installation in its reverse thrust mode.

Fig. 3 is a sectional view of apparatus constructed in accordance with the preferred embodiment of the invention, with the sliding portion of the plug shown in its forward mode position.

Fig. 4 is like Fig. 3 except that it shows the sliding portion of the plug in its reverse mode position.

Fig. 5 is a cross-sectional view taken along the line 5-5 in Fig. 3.

Fig. 6 is a cross-sectional view taken along the line 6-6 in Fig. 4.

Fig. 7 is an enlarged fragmentary vertical sectional view of the apparatus shown in Figs. 3-6, illustrating the forward bearing carried by the sliding portion of the plug adjacent to the opening in the center axial support beam.

Fig. 8 is a fragmentary top plan view of the features shown in Fig. 7, with parts shown in section.

Fig. 9 is a schematic view of the control system of the preferred embodiment, showing the system in its forward thrust mode.

Fig. 10 is like Fig. 9 except that it shows the system in its reverse thrust mode.

Fig. 11 is a graphical illustration of net reverse thrust versus aircraft speed in a conventionally equipped aircraft and in an aircraft into which apparatus constructed according to the invention has been incorporated.

Fig. 12 is a graphical illustration of stopping distance versus aircraft tire-runway friction coefficient in a conventionally equipped aircraft, in an aircraft equipped with apparatus constructed according to the invention, and in a hypothetical aircraft in which the aftward primary thrust has been reduced to zero.

## Best Mode for Carrying out the Invention

The drawings show apparatus that is constructed according to the invention and that also constitutes the best mode of the invention currently known to the applicant. In the drawings, the apparatus of the invention is shown incorporated into a jet aircraft for the purpose of controlling the pressure and thereby the thrust in the primary nozzle 20 of a jet engine on the aircraft. This is anticipated to be the primary application of the apparatus of the invention. However, it is of course to be understood that the apparatus of the invention may also be used to advantage in other environments in which it is desired to vary the cross-sectional area of the flow path in a nozzle of a power device.

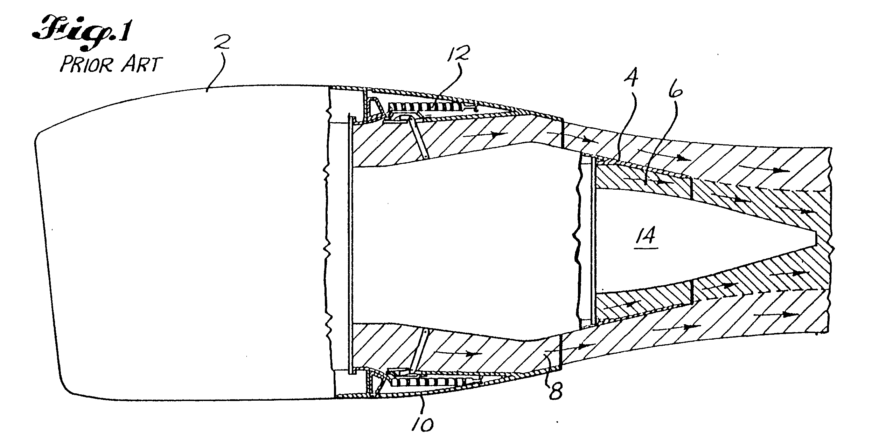

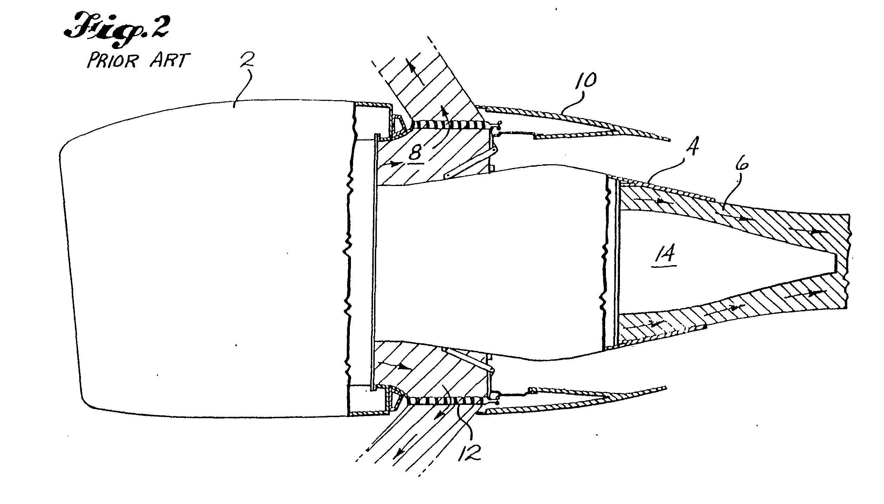

Figs. 1 and 2 illustrate a typical known high-bypass ratio turbofan installation of a type into which apparatus constructed according to the invention may be incorporated to great advantage. The structure and functioning of such installations is well-known and will only be described briefly herein. As shown in Figs. 1 and 2, the engine includes a primary nozzle 4 with a nacelle 2 and a primary nozzle plug 14 of a known construction. The engine flow is divided into two parts, the primary flow 6 through the primary nozzle 4 and the fan flow 8 surrounding the primary nozzle 4. Since this is a high-bypass ratio installation, the amount of fan flow relative to the primary flow is comparatively large. When reverse thrust is needed to provide braking action, a thrust reverser sleeve 10 is moved aftward to open thrust reverser cascades 12. This causes the fan flow 8 to be redirected in a generally forward direction. The system for redirecting the fan flow shown in Figs. 1 and 2 is of a type well-known in the art and forms no part of the present invention. The system is illustrated herein for the purpose of providing an example of an installation into which the apparatus of the invention may be incorporated to great advantage. Fig. 1 shows the installation in its forward mode configuration, and Fig. 2 shows the installation in its reverse mode configuration.

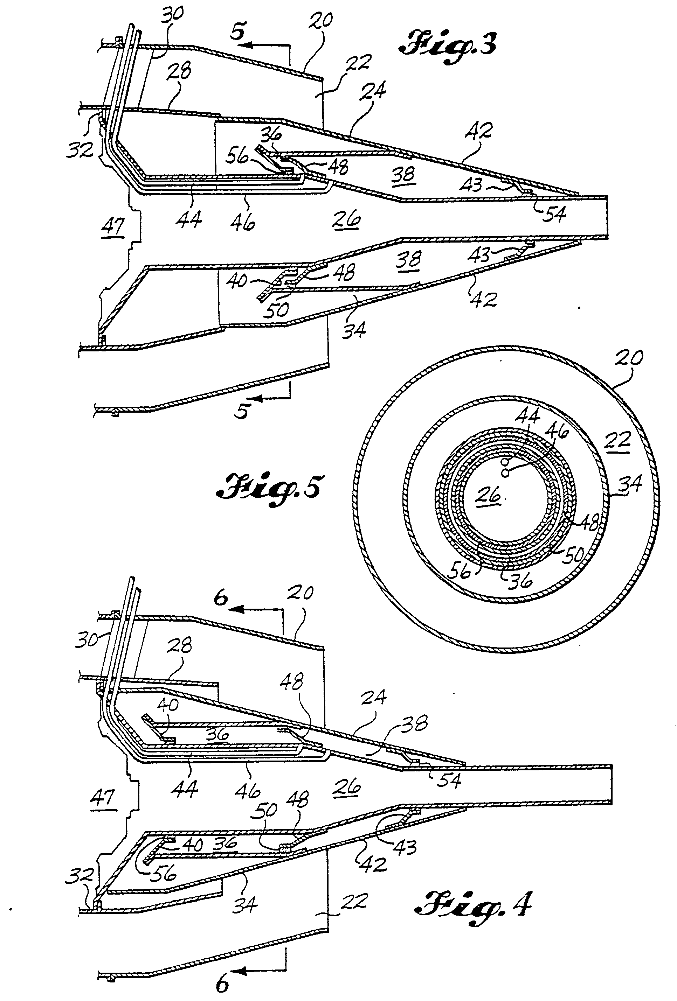

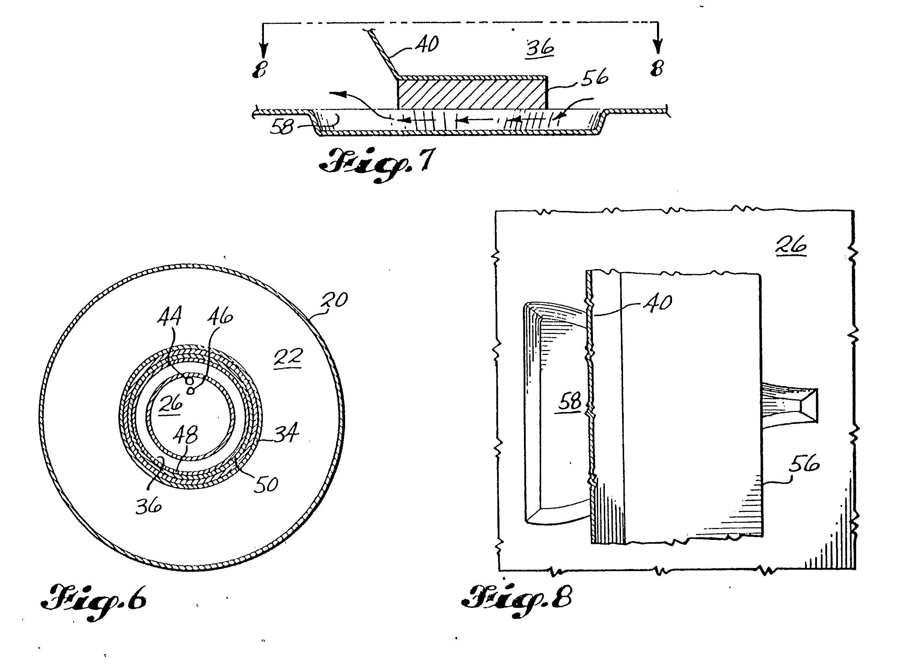

Figs. 3 and 4 show the preferred embodiment of the apparatus of the invention. The apparatus includes a cantilevered plug 24 that is installed in the primary nozzle 20 of an aircraft jet engine. The nozzle plug 24 has a fixed portion 26, 28 and a sliding portion 34. The sliding portion 34 has an aftwardly tapered aft end portion, and is moved axially with respect to the nozzle 20 in order to vary the throat area 22 of the nozzle 20 to improve the overall reverse thrust performance of the engine. Fig. 3 shows the sliding portion 34 in its stowed forward mode position. Fig. 4 shows the sliding portion 34 in its deployed reverse mode position.

The fixed portion of the plug 24 includes a center axial beam 26 on which the sliding portion 34 slides and which projects into and extends through an axial opening through the sliding portion 34. The center beam 26 is generally hollow in order to minimize its weight, and in the installation shown in Figs. 3 and 4 the beam takes essentially the form of a hollow tube 26. The fixed portion 26, 28 of the plug 24 also includes a coaxial forward sleeve 28 into which the forward end of the sliding portion 34 of the plug 24 is received when the sliding portion 34 is moved axially inwardly with respect to the nozzle 20.

The plug 24 is supported generally within the nozzle, preferably in a radially central position. In the nozzle 20 shown in Figs. 3 and 4, the throat and exit areas are close to each other, and the aft portions of the support tube 26 and the sliding portion 34 extend axially aftwardly out of the nozzle 20. The means for supporting and positioning the plug 24 may of course take a variety of forms. In the preferred embodiment shown in the drawings, the support means includes a number of fasteners that attach the inner end of support tube 26 to a plug attach flange 32 on the engine body 47. The fasteners are spaced circumferentially around the flange and the inner end of tube 26.

The sliding portion 34 of the plug 24 includes first and second expansible chambers 36, 38. The first chamber 36 is located forward of the second chamber 38. Each of the chambers 36, 38 is defined by both wall portions of the support tube 26 and wall portions that are part of the sliding portion 34. In chamber 36, a pressure surface 40 is formed by a chamber wall that is part of the sliding portion 34 of the plug 24, and in chamber 38 a pressure surface 42, 43 is formed by chamber walls that are also part of said portion 34. When fluid pressure is introduced into the respective chamber 36, 38, it acts against the pressure surface 40, 42, 43 to move the sliding portion 34 in an axial direction and expand the chamber (36, 38).

In the preferred embodiment, the fluid pressure for pressurizing each of the chambers 36, 38 is obtained by directing bleed air from the engine compressor into the chamber to be pressurized. The pressurized bleed air is supplied to each chamber 36, 38 through tubing 44, 46 that extends through a fairing 30 (which provides a streamlined enclosure), the sleeve 28, and the support tube 26 and terminates at an inlet opening into the respective chamber 36, 38. The inlet openings into the chambers 36, 38 are formed in a chamber wall defined by an outer wall of the support tube 26, as shown in the drawings. This arrangement makes it possible to move the sliding portion 34 of the plug 24 in either axial direction without the need for any moving parts or control apparatus in the severe environment of the primary flow other than the single moving part consisting of the sliding portion 34. The preferred embodiment of the control system of the apparatus of the invention is described further below.

In the preferred embodiment of the apparatus shown in the drawings, the first chamber 36 is positioned forward of the second chamber 38 and the two chambers 36, 38 are separated by a bulkhead 48 and seal 50 that are a part of the fixed portion of the plug 24. This arrangement provides relatively simple and very efficient operation of the sliding portion 34 and efficient use of space. The bulkhead 48 is carried by the support tube 26 and extends generally radially outwardly from the tube 26. The seal 50 is carried by the outer radial end of the bulkhead 48 and sealingly engages an inner wall surface of the sliding portion 34.

The forward chamber 36 is defined by an axially extending wall of the support tube 26 positioned forward of the bulkhead 48, the bulkhead 48, an axially extending wall of sliding portion 34 spaced radially outwardly from support tube 26, and pressure surface 40 formed by a forward generally radially extending wall of sliding portion 34. The aft chamber 38 is formed by a tapered sidewall of the tube 26 located aftward of the bulkhead 48, the axially extending wall of support tube 26 located aftward of the tapered sidewall, pressure surface 42, 43 formed by an aft generally radially extending wall 43 of sliding portion 34 and the aftwardly tapered outer wall 42 of the sliding portion 34, and the bulkhead 48.

As the sliding portion 34 slides axially, an aft bearing 54 carried by the radially inner end of the radial wall 43 slidingly engages the aft axially extending circumferential wall of the tube 26. A forward bearing 56 is carried by the inner end of the wall forming pressure surface 40 in chamber 36 and slidingly engages the forward portion of support tube 26 as the sliding portion 34 slides axially. This arrangement minimizes the number of bearing surfaces required and contributes to the reliability and efficient operation of the apparatus. Moreover, since the supply of bleed air from the compressor would normally be much greater than is required to operate the apparatus, some leakage on the sealing and bearing surfaces is tolerable and can even be desirable. Therefore, the tolerances on the bearings may be loose without adversely affecting the operation of the system.

In the operation of the system, pressure is supplied to aft chamber 38 to move and maintain the sliding portion 34 of the plug 24 in its stowed aft position shown in Fig. 3 during operation of the aircraft in its forward mode. The forward mode of a high-bypass ratio turbofan installation is illustrated in Fig. 1. In the preferred embodiment of the apparatus of the invention, a regulated stowing pressure is continuously supplied to chamber 38 during all operating modes in order to bias the sliding portion 34 into its forward mode position. Thus, in the absence of a specific signal to deploy the sliding portion 34 into its reverse position (i.e. in the absence of the pressurization of forward chamber 36), the sliding portion 34 of the plug 24 will always be moved into and held in its forward mode position shown in Fig. 3.

When fluid pressure is supplied to forward chamber 36 by allowing bleed air from the engine compressor through tubing 44 into chamber 36, the pressure acts on pressure surface 40 to move the sliding portion 34 axially inwardly with respect to the nozzle 20 into its reverse mode position shown in Fig. 4. As can be seen in Figs. 3 and 4, the movement of the tapered section of sliding portion 34 adjacent to the throat area 22 of the nozzle 20 causes the throat area to vary. The throat area is greater in the reverse mode than in the forward mode. The increase in the throat area caused by the deploying of the sliding portion 34 creates a reduction in the primary aftwardly directed thrust without the need for redirecting the primary flow. The opening up of the nozzle throat area 22 produces an overall change in the engine cycle that results in a lower primary total pressure in the nozzle 20 and thus less primary thrust. The reduction in the aftwardly directed primary thrust makes the redirection of the fan thrust in a generally forward direction more efficient to provide the aircraft with more efficient braking action.

In order to prevent damage to the apparatus and surrounding structures due to high impact loads, the system of the invention is preferably provided with means for stopping movement of the sliding portion 34 of the plug 24 relatively gradually at either end of its axial travel. Both the means for stopping forward axial movement and the means for stopping aftward axial movement would generally include a stop surface against which the sliding portion 34 comes to rest at the end of its travel. The purpose of the stop surfaces is to prevent any residual momentum of the sliding portion 34 from causing it to overtravel beyond either its stowed or its deployed position. Other means are provided for slowing the motion of the sliding portion 34 in either direction.

In the preferred embodiment of the apparatus of the invention, the slowing of the outward or aftward axial movement of the sliding portion 34 of the plug 24 is provided by the controlled leakage of fluid out of the forward chamber 36 as the sliding portion 34 slides aftwardly and chamber 36 contracts. The aftward movement of sliding portion 34 moves pressure surface 40 toward bulkhead 48 to compress the fluid in chamber 36. If bearing 56 were fluid tight and no other possible fluid outlets were provided in chamber 36, the compression of the air in chamber 36 would halt aftward movement of the sliding portion 34 at some point before portion 34 reached its aft stop. In the preferred embodiment, leakage out of chamber 36 at a predetermined rate is provided by leakage around forward bearing 56 in order to control the compression of the air in chamber 36. The controlled compression of the fluid slows the rate of movement of the sliding portion 34 to allow it to gradually come to a stop against its aft stop surface in its stowed position. This approach to providing a gradual slowing of the aftward movement of portion 34 is extremely reliable since it requires no control apparatus and is very simple in construction and operation.

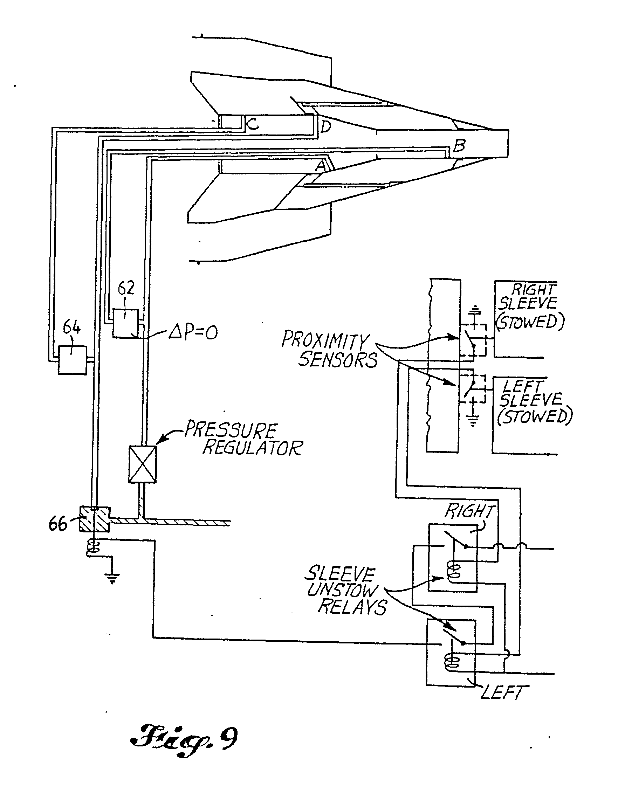

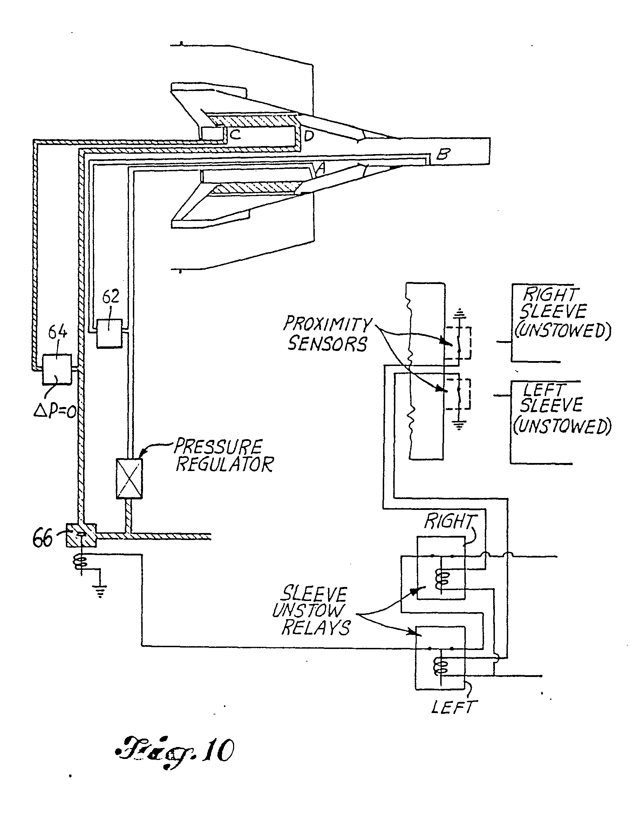

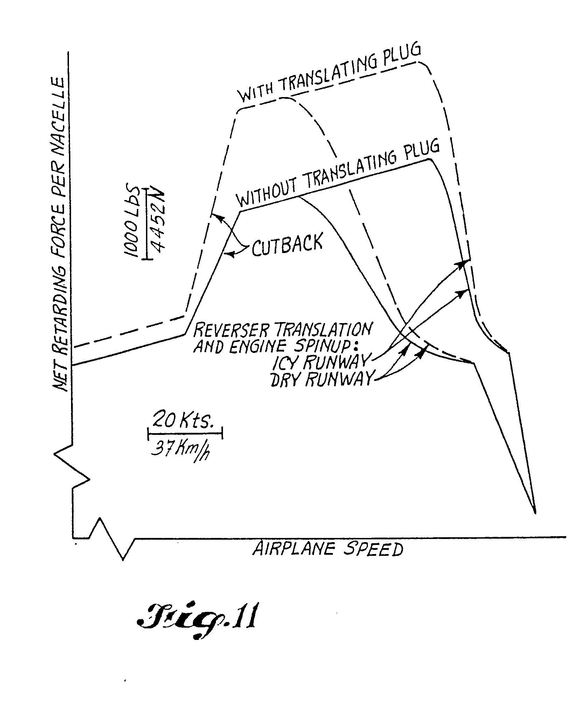

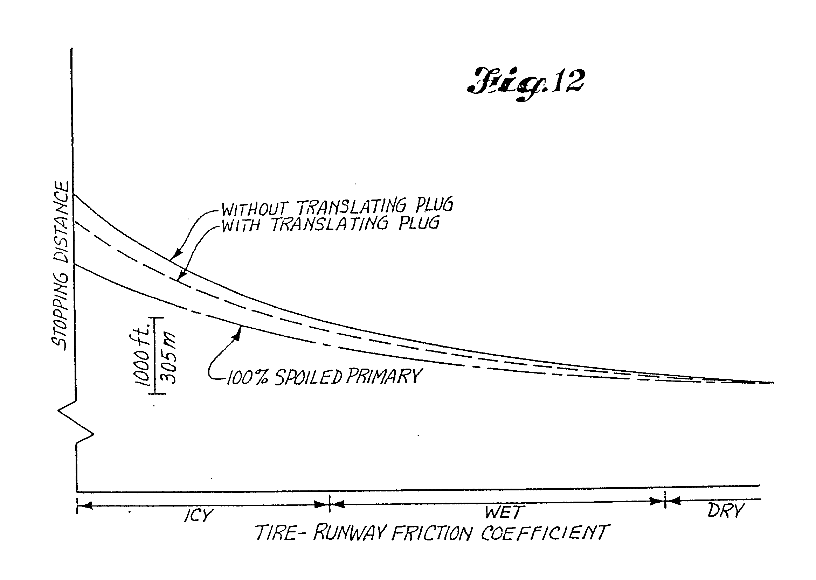

The preferred embodiment of the means for slowing forward axial movement of sliding portion 34 is shown in Figs. 7 and 8. The slowing of forward movement, like the slowing of aftward movement, is provided by a controlled leakage of fluid out of forward chamber 36. To accomplish this controlled leakage, the outer surface of support tube 26 along which forward bearing 56 slides as sliding portion 34 approaches its deployed position is provided with an opening 58. This opening 58 increases in circumferential extent from its aft end to its forward end. The preferred shape for the opening 58 is most clearly shown in Fig. 8.

When chamber 36 is pressurized to move sliding portion 34 from its stowed to its deployed position, bearing 56 slides along support tube 26 and a portion of bearing 56 moves across the opening 58 in tube 26. This allows fluid to leak out of chamber 36 around the inner portion of the part of bearing 56 that is adjacent to the opening 58. This is most clearly illustrated in Fig. 7. As the sliding portion 34 continues to move in a forward direction, the circumferential extent of the leakage increases as the circumferential extent of the opening 58 increases. The shape of the opening 58 is designed to control the leakage at a desired predetermined rate that increases at a desired rate as the sliding portion 34 approaches its deployed position. Since fluid pressure is continuosuly being supplied to chamber 38 through tubing 46, as leakage out of chamber 36 increases an equilibrium is gradually created between the force due to the fluid pressure in chamber 36 tending to move portion 34 forwardly and the force due to the fluid pressure in chamber 38 tending to move portion 34 aftwardly. When portion 34 reaches its fully deployed position and comes to a rest against its forward stop, the forces exerted on the pressure surfaces 40, 42, 43 of the two chambers 36, 38 are essentially in equilibrium and the pressure in chamber 36 is preferably just sufficient to hold sliding portion 34 in its deployed position against the force biasing portion 34 toward its stowed position.

The control of the supply of pressurized bleed air to chambers 36, 38 and thus the control of the position of sliding portion 34 of plug 24 may be accomplished by a variety of means. Figs. 9 and 10 illustrate in schematic form the best mode of the control system currently known to the applicant. The control system includes sensors that sense the position of sliding portion 34 and valves that regulate the supply of fluid pressure to each chamber 36, 38. Both the sensors and the valves are located outside the harsh environment of the primary flow. Fig. 9 shows the configuration of the control system when the sliding portion 34 is in its aftward stowed position, and Fig. 10 shows the configuration when portion 34 is in its forward deployed position.

Pressure taps at locations A, B, C, D transmit pressure to pressure transducers 62, 64 located outside the nozzle 20. The pressures at tap locations A and B are compared by transducer 62. When the system is in its forward operational mode, both locations A and B are contained within expanded chamber 38 and thus the pressures at locations A and B should be identical. When transducer 62 receives essentially identical pressures from taps A and B, a signal is sent out by transducer 62 that indicates that sliding portion 34 is in its stowed position. Similarly, taps C and D transmit pressures to transducer 64. When sliding portion 34 is in its deployed position, both pressure tap locations C and D are within forward chamber 36 and thus both taps C and D transmit essentially identical pressures to transducer 64. Transducer 64 compares the pressures at locations C and D and sends out a signal that sliding portion 34 is in its deployed position.

The control system also includes proximity sensors of a well-known type. Such proximity sensors are generally included on each reverser sleeve in any installation having thrust reversers. The proximity sensors sense movement of the fan flow reverser sleeves toward their reverse positions and produce a signal to cause sleeve unstow relays to close. These relays, like all the sensitive control apparatus of the system are located in an engine accessory unit protected from the harsh environment of the primary flow. The sleeve unstow relays are connected in series so that when both are closed, power is supplied to a valve 66 to open the valve 66 to allow bleed air to move through tubing 44 into forward chamber 36 and thereby move the sliding portion 34 toward its reverse mode position. As described above, the supply of bleed air to aft chamber 38 is continuously maintained. The proper operation of the system can be monitored by the pilot by checking the signals from transducers 62 and 64.

Fig. 11 illustrates the performance of a typical known fan thrust reverser with and without the incorporation of the apparatus of the invention. In Fig. 11, the net retarding force is plotting as a function of the forward speed of the aircraft. The curves shown in Fig. 11 were developed with the assumption that takeoff power is held as the speed of the aircraft reduces to a given value, at which point it is necessary to reduce the power to prevent engine surging. Power is reduced continuously to a lower setting which is then held until the aircraft is stopped. The reverse thrust performance shown in Fig. 11 includes the amount by which drag is reduced due to the effects of reverse efflux.

As can be clearly seen in Fig. 11, the benefits of the apparatus of the invention are obtained primarily at the high takeoff power setting of the engine. Therefore, the longer the engine is held at high power, the greater the improvement in braking action provided by the apparatus of the invention. The length of time during which high power may be maintained is affected by both the amount of time it takes the engine to reach takeoff power from idle once the reversers are engaged and by the cutoff speed at which power has to be reduced to prevent engine surge. In the case of an emergency stop on a dry runway with good braking friction, the aircraft will generally slow to the cutoff speed just as the engine reaches takeoff power. When runway conditions are relatively poor, the time it takes the aircraft to decelerate a given amount will be longer and the beneficial effects of the apparatus of the invention will be greater.

Fig. 12 is a graph of the relationship between aircraft stopping distance and runway friction coefficient. The graph includes three curves illustrating three different situations. The lowest curve shows the effect of eliminating all of the primary thrust. As a practical matter it is extremely difficult to eliminate all of the primary thrust, and the lowest curve is intended to show the maximum theoretically obtainable benefit which may be produced by reducing primary thrust. The uppermost curve illustrates the relationship between stopping distance and runway friction coefficient for an installation such as the one shown in Figs. 1 and 2 lacking the apparatus of the invention. The middle curve shows the relationship for an installation into which the preferred embodiment of the apparatus of the invention has been incorporated. As can be clearly seen in Fig. 12, the apparatus of the invention provides a sizeable fraction of the theoretically obtainable benefit of reducing primary thrust.

Apparatus constructed according to the invention provides a great improvement in overall reverse thrust performance of systems such as the high-bypass ratio turbofan installation shown in Figs. 1 and 2. The performance improvement is accomplished without the need for overly complex apparatus or procedures and without significantly adding to the weight of the aircraft. Apparatus constructed according to the invention is highly reliable and simple to operate and requires only a single moving part in the nozzle environment, the sliding portion of the nozzle plug. The great advantages stemming from the ability to locate sensitive control apparatus and moving parts in locations remote from the nozzle environment are discussed above. To summarize, the apparatus of the invention provides an economical, efficient, and reliable means for varying the size of flow path cross sections in power device nozzles.

**Claims**

1. Apparatus for varying the cross-sectional area of a flow path in an exhaust nozzle (20) of a power device, comprising:

a nozzle plug (24) having a fixed portion (26, 28) and a sliding portion (34); each of said portions including first and second chamber wall means; said first chamber wall means of said portions together defining a first expansible chamber (36); and said second chamber wall means of said portions defining a second expansible chamber (38);

support means for supporting the plug in position at least partially within an exhaust nozzle of a power device;

first operating means (44) for introducing fluid pressure into said first expansible chamber to act against a portion of said first chamber wall means of said sliding portion, to cause said sliding portion to slide axially inwardly with respect to the nozzle; and

second operating means (46) for introducing fluid pressure into said second expansible chamber to act against a portion of said second chamber wall means of said sliding portion, to cause said sliding portion to slide axially outwardly with respect to the nozzle;

wherein the cross-sectional area of the plug (24), at each axial station along at least a portion of the axial length of the plug, changes when the sliding portion slides axially, to change the cross-sectional area of an adjacent portion of the nozzle flow path, and wherein said fixed portion includes a center axial support beam (26) taking up substantially all radial loads on the sliding portion, and which projects into said sliding portion and on which said sliding portion slides, characterized in that said first and second chamber (36, 38) are arranged radially outward of said center axial support beam (26), and in that said first and second chamber wall means of said fixed portion comprise radial outer wall portions of said support beam (26) with which said sliding portion is in sliding contact.

2. Apparatus as described in claim 1, characterized in that said fixed portion of the plug includes an essentially coaxial sleeve (28) into which an inner end portion of said sliding portion is received.

3. Apparatus as described in claim 1, characterized in that each of the first and second operating means (44, 46) includes tubing extending through said beam to convey pressurized fluid to the first and second expansible chambers (38, 39), respectively.

4. Apparatus as described in claim 1, characterized in that fluid pressure is continuously supplied by one of the first and second operating means to the respective expansible chamber to bias said sliding portion (34) of the plug (24) in a desired axial direction.

5. Apparatus as described in claim 1, characterized by inward stop means and outward stop means (58) for gradually stopping inward and outward axial sliding movement of said sliding portion of the plug, respectively.

6. Apparatus as described in claim 1, characterized by control means for controlling the first and second operating means to thereby control the position of said sliding portion of the plug; said control means including sensor means for sensing the position of said sliding portion, and valve means located outside the nozzle for regulating the supply of fluid pressure to each chamber.

**Patentansprüche**

1. Einrichtung zum Verändern der Querschnittsfläche eines Strömungswegs in einer Auslaßdüse (20) einer Leistungseinrichtung, umfassend:

einen Düsenstopfen (24), der einen ortsfesten Teil (26, 28) und einen Verschiebeteil (34) hat; wobei jeder dieser Teile eine erste und zweite Kammerwandeinrichtung aufweist; wobei die ersten Kammerwandeinrichtungen dieser Teile zusammen eine erste expandierbare Kammer (36) begrenz und wobei die zweiten Kammerwandeinrichtungen dieser Teile eine zweite expandierbare Kammer (38) begrenzen;

eine Halteeinrichtung zum Halten des Stopfens in Position wenigstens teilweise innerhalb einer Auslaßdüse der Leistungseinrichtung;

eine erste Betätigungseinrichtung (44) zum Einleiten von Strömungsmitteldruck in die erste expandierbare Kammer zum Wirken gegen einen Teil der ersten Kammerwandeinrichtung des Verschiebeteils, so daß bewirkt wird, daß 'sich der Verschiebeteil axial nach einwärts mit Bezug auf die Düse verschiebt; und

eine zweite Betätigungseinrichtung (46) zum Einleiten von Strömungsmitteldruck in die zweite expandierbare Kammer zum Wirken gegen einen Teil der zweiten Kammerwandeinrichtung des Verschiebeteils, so daß bewirkt wird, daß sich der Verschiebeteil axial nach auswärts mit Bezug auf die Düse verschiebt;

worin sich die Querschnittsfläche des Stopfens (24) in jeder axialen Station entlang von wenigstens einem Teil der axialen Länge des Stopfens ändert, wenn sich der Verschiebeteil axial verschiebt, so daß sich die Querschnittsfläche eines benachbarten Teils des Düsenströmungswegs verändert, und wobei der ortsfeste Teil einen mittelaxialen Halteträger (26) umfaßt, der im wesentlichen alle radialen Belastungen auf den Verschiebeteil aufnimmt, und der in den Verschiebeteil vorsteht und auf dem sich der Verschiebeteil verschiebt, dadurch gekennzeichnet, daß die erste und zweite Kammer (36, 38) radial auswärts von dem mittelaxialen Halteträger (26) angeordnet sind, und daß die erste und zweite Kammerwandeinrichtung des ortsfesten Teils radial äußere Wandteile des Halteträgers (26) umfaßt, womit der Verschiebeteil in Verschiebekontakt ist.

2. Einrichtung nach Anspruch 1, dadurch gekennzeichnet, daß der ortsfeste Teil des Stopfens eine im wesentlichen koaxiale Hülse (28) aufweist, in welcher ein innerer Endteil des Verschiebeteils aufgenommen wird.

3. Einrichtung nach Anspruch 1, dadurch gekennzeichnet, daß jede der ersten und zweiten Betätigungseinrichtungen (44, 46) Rohrleitungen aufweist, die sich durch den Träger zur Förderung von unter Druck stehendem Fluid zu der ersten bzw. zweiten expandierbaren Kammer (38, 39) erstreckten.

4. Einrichtung nach Anspruch 1, dadurch gekennzeichnet, daß Fluiddruck kontinuierlich durch eine von der ersten und zweiten Betätigungseinrichtung zu der jeweiligen expandierbaren Kammer zugeführt wird, so daß der Verschiebeteil (34) des Stopfens (24) in einer gewünschten Axialrichtung vorgespannt wird.

5. Einrichtung nach Anspruch 1, gekennzeichnet durch eine Einwärts-Anschlageinrichtung und eine Auswärts-Anschlageinrichtung (58) zum allmählichen Stoppen der Einwärts- bzw. Auswärtsaxialverschiebebewegung des Verschiebeteils des Stopfens.

6. Einrichtung nach Anspruch 1, gekennzeichnet durch eine Steuereinrichtung zum Steuern der ersten und zweiten Betätigungseinrichtung, so daß dadurch die Position des Verschiebeteils des Stopfens gesteuert wird; wobei die Steuereinrichtung eine Sensoreinrichtung zum Fühlen der Position des Verschiebeteils aufweist, sowie eine sich außerhalb der Düse befindende Ventileinrichtung zum Regulieren der Zufuhr von Fluiddruck zu jeder Kammer.

## Revendications

1. Appareil destiné à faire varier la section d'un trajet d'écoulement dans une tuyère d'échappement (20) d'une machine motrice, comprenant:

un obturateur (24) de tuyère ayant une partie fixe (26, 28) et une partie coulissante (34), chacune des parties comprenant des parois d'une première et d'une seconde chambre, les parois d'une première chambre desdites parties délimitant ensemble une première chambre dilatable (36), et les parois d'une seconde chambre desdites parties délimitant une seconde chambre dilatable (38),

un dispositif de support de l'obturateur en position au moins partiellement dans une tuyère d'échappement d'une machine motrice,

un premier dispositif d'actionnement (44) destiné à transmettre la pression d'un fluide dans la première chambre dilatable afin que cette pression agisse sur une partie des parois de la première chambre de la partie coulissante et provoque le coulissement de la partie coulissante en direction axiale vers l'intérieur par rapport à la tuyère, et

un second dispositif d'actionnement (46) destiné à transmettre la pression d'un fluide à la seconde chambre dilatable afin qu'elle agisse sur une partie des parois de la seconde chambre de la partie coulissante et provoque le coulissement de la partie coulissante en direction axiale vers l'extérieur par rapport à la tuyère,

la section de l'obturateur (24), à chaque emplacement axial le long d'une partie au moins de la longueur axiale de l'obturateur, changeant lorsque la partie coulissante coulisse axialement afin que la section d'une partie adjacente du trajet d'écoulement de la tuyère change, la partie fixe comprenant une poutre axiale centrale de support (26) encaissant pratiquement toutes les forces radiales appliquées à la partie coulissante, dépassant dans la partie coulissante et sur laquelle la partie coulissante coulisse, caractérisé en ce que la première et la seconde chambre (36, 38) sont disposées radialement à l'extérieur de la poutre axiale centrale de support (26), et en ce que les parois de la première et de la seconde chambre de la partie fixe comprennent des parties de parois radialement externes de la poutre de support (26) avec laquelle la partie coulissante est en contact par coulissement.

2. Appareil selon la revendication 1, caractérisé en ce que la partie fixe de l'obturateur a un manchon sensiblement coaxial (28) dans lequel se loge une partie interne d'extrémité de la partie coulissante.

3. Appareil selon la revendication 1, caractérisé en ce que chacun des premier et second dispositifs d'actionnement (44, 46) comporte un tube disposé dans la poutre et destiné à transmettre un fluide sous pression à la première et à la seconde chambre dilatable (38, 39) respectivement.

4. Appareil selon la revendication 1, caractérisé en ce que la pression du fluide est transmise constamment par l'un des premier et second dispositifs d'actionnement à la chambre dilatable respective afin que la partie coulissante (34) de l'obturateur (24) soit repoussée dans un sens axial voulu.

5. Appareil selon la revendication 1, caractérisé par un dispositif interne de butée et un dispositif externe de butée (58) destinés à ralentir progressivement le déplacement axial de coulissement vers l'intérieur et vers l'extérieur de la partie coulissante de l'obturateur, respectivement.

6. Appareil selon la revendication 1, caractérisé par un dispositif de commande du premier et du second dispositif d'actionnement de manière que la position de la partie coulissante de l'obturateur soit réglée, le dispositif de commande comprenant un dispositif capteur destiné à détecter la position de la partie coulissante, et un dispositif à soupape placé en dehors de la tuyère et destiné à réguler la pression de fluide transmise à chaque chambre.

*Fig.1*
PRIOR ART

2

12

4

6

14

8

10

EP 0 164 337 B1

*Fig. 2*
PRIOR ART

2

10

8

4

6

14

12

EP 0 164 337 B1

EP 0 164 337 B1

Fig.3

Fig.5

Fig.4

3

*Fig.7*

*Fig.6*

*Fig.8*

EP 0 164 337 B1

*Fig. 9*

*Fig. 10*

*Fig.11*

Fig.12

STOPPING DISTANCE

WITHOUT TRANSLATING PLUG
WITH TRANSLATING PLUG

1000 ft.
305 m

100% SPOILED PRIMARY

ICY
WET
DRY

TIRE- RUNWAY FRICTION COEFFICIENT

EP 0 164 337 B1